# EUROPEAN PATENT APPLICATION

(11) **EP 2 779 670 A2**
(43) Date of publication of application: **17.09.2014**
(21) Application number: 13168995.2
(22) Date of filing: 23.05.2013
(51) Int. Cl.: H04N 21/4147, H04N 21/4335, H04N 5/76

(54) **Method of time shifting in a digital TV and apparatus using the same**

(30) Priority: 12.03.2013 KR 20130026124
(71) Applicant: Samsung Electronics Co., Ltd, Gyeonggi-do 443-742 (KR)
(72) Inventor: Yu, Guitao, 210019 Nanjing (CN); Chen, Hailin, 210019 Nanjing (CN); Chen, Binde, 210019 Nanjing (CN)
(74) Representative: Brandon, Paul Laurence

(57) **Abstract**

A method of time shifting in a digital television (TV) includes recording a digital TV program; detecting a condition under which the recording is to be suspended; and changing a size of a disk space occupied by the recorded digital TV program according to the condition of suspension.

## Description

### CROSS-REFERENCE TO RELATED APPLICATION

This application claims priority from Korean Patent Application No. 10-2013-0026124, filed on March 12, 2013, in the Korean Intellectual Property Office, the disclosure of which is incorporated herein by reference in its entirety.

### BACKGROUND

### Field

Apparatuses and methods consistent with exemplary embodiments relate to digital television (TV) technologies, and more particularly, to a method of time shifting in a digital TV and an apparatus using the same for improving disk space utilization.

### Description of the Related Art

The term "time-shifting" in a digital television (TV) refers to a technology of recording a program in a memory for future use. When watching a digital TV program, a viewer may press a pause button or a rewind/fast forward button at any time. The viewer may also select to watch a TV program played several days ago.

In the related art, a time-shifting function is generally provided by a network TV, which is located in a server side. Of note there is Chinese Patent Application No. 200610147769.1, the title of which is "A live server with time-shifting function and implementation method thereof". Also, there is Chinese Patent Application No. 200510111252.2, the title of which is "Method for implementing time-shifting functions by a network interactive TV system". A time-shifting scheme of the above patent documents is adopted by television service providers and has a characteristic in that a server side may shield complexity and a client side may jump to any interested area.

Currently, some technical schemes are developed such that time-shifting function is provided by a TV side. That is, the TV side records data during a certain time period in local to facilitatethe viewer's time-shifting. Regarding a time-shifting strategy, the following two factors are mainly considered:

Firstly, a given time and a given space for time-shifting are considered.

According to a current bit rate and a predetermined upper limit of a code rate, it is calculated a duration of a program which is recordable in a current disk. Next, the program may be recorded in an available disk space until no available disk space exists. Meanwhile, data that can be played and is provided for an upper layer is fixed.

Disadvantages of the above method are as follows:

1) Space is not efficiently utilized. In the above method, a duration for recording a program is calculated, according to the predetermined upper limit of the code rate. However, if calculated according to an actual code rate, time-shifting contents of a much longer time duration may be provided for an upper layer to a current space.

2) Here, when a disk space is occupied by other applications, a duration of the time-shifting content may become shorter than a previously determined duration.

Secondly, a given time and a variant space may be considered.

In Chinese Patent PublicationNo. 101146196A, the title of which is "Method and device for controlling time-shifting storage space and a TV receiver thereof", more space may be allocated for a time-shifting instance when the time-shifting instance needs a larger space. However, when a time-shifting instance does not need a larger space, a redundant space is actively released.

In US Patent PublicationNo. 2006/171658 A1, the title of which is "More user friendly time-shift buffer", a file cutting module is added and a file operation is complicated. Outdated data may be cut simultaneously when writing new recorded data. In a general time-shifting process, newly recorded data may replace outdated data. An additional cutting function may lower time-shifting performance.

In the above related art technical solution, efficient utilizing of a disk space more when the disk space is insufficient and compatibility with other applications are not taken into consideration. Besides, in the above related art, time-shifting is performed regarding a single tuner. As a dual tuner hardware gains increasing popularity, there exists a need to provide a time-shifting function for at least two tuners.

### SUMMARY

Accordingly, one or more exemplary embodiments provide a method and an apparatus for time shifting for improving disk space utilization during time shifting in a digital TV, in which a size of a disk space occupied by a time shifting program is dynamically changed and a decrease in utilizing the disk space if the disk space is insufficient is prevented.

According to an aspect of an exemplary embodiment, provided is a method of time shifting in a digital television, the method including: recording a digital TV program; detecting a condition under which the recording is to be suspended; and changing a size of a disk space occupied by the recorded digital TV program according to the condition of suspension.

The condition of suspension may be such that a duration of a currently recorded digital TV program reaches a preset maximum time-shifting duration.

The method may further include setting the maximum time shifting duration in advance by a user.

The method may further include setting priorities of obtaining the disk space in advance when a plurality of digital TV programs are recorded simultaneously.

The changing may include allocating the disk space among the plurality of digital TV programs according to corresponding priorities if the disk space is insufficient.

The changing may include preferentially allocating the disk space to a digital TV program that does not reach a preset minimum time-shifting duration if the disk space is insufficient.

According to an aspect of an exemplary embodiment, provided is a method of time shifting in a digital TV, the method including: determining whether a duration of a currently recorded digital TV program reaches a maximum time-shifting duration; determining whether to release redundant disk fragments by comparing a stream bit rate of a transmission stream currently received and a predetermined stream bit rate if it is determined that the duration of the currently recorded digital TV program exceeds the maximum time-shifting duration; deleting a digital TV program recorded earliest to release the redundant disk fragments if the stream bit rate of the currently received transmission stream is lower than or equal to the predetermined stream bit rate; and replacing the digital TV program recorded earliest in a current file with the newly recorded digital TV program.

The method may further include setting at least one of the maximum time-shifting duration and a minimum time-shifting duration in advance by a user.

The method may further include setting priorities of obtaining the storage space in advance if a plurality of digital TV programs are recorded simultaneously.

If the storage space is insufficient, the disk space may be allocated among the plurality of digital TV programs according to corresponding priorities.

If the storage space is insufficient, the storage space may be preferentially allocated to adigital TV program that does not reach the minimum time-shifting duration.

A recorded digital TV program may be managed through a disk fragment list which stores linkage information of disk fragments and an inode of a file system.

When the recorded digital TV program is loaded, the disk fragment list may be queried and a physical address of a next disk fragment to be read may be obtained.

The releasing the redundant disk fragments may include setting a recording time as a priority to release a disk fragment recorded earliest, and updating the disk fragment list and the inode of the file system when a total duration of actually recorded data exceeds the maximum time-shifting duration due to reduction of the transmission stream.

The releasing the redundant disk fragments may include updating a starting sector and an ending sector in the disk fragment list and an inode table of the file system if the released redundant disk fragment is larger than a required storage space, the starting sector and the ending sector each representing a start location and an end location of the recorded digital TV program.

The recorded digital TV program may be managed through a disk fragment list which stores linkage information of disk fragments and an inode of a file system, and the releasing the redundant disk fragments may include deleting data of a previously recorded digital TV program from the disk fragment list when the maximum time shift duration is reached and updating the inode of the file system if a user sets to reduce the maximum time-shifting duration.

The method may further include determining whether new disk fragments are requested depending on whether a newly recorded digital TV program is capable of replacing a previously recorded digital TV program within the maximum time-shifting duration if the stream bit rate of the currently received transmission stream is higher than or equal to the predetermined stream bit rate; determining whether there is any storage space left if it is determined that the duration of the currently recorded digital TV program does not exceed the maximum time-shifting duration or if the new disk fragments are requested; replacing the digital TV program recorded earliest in the current file with the newly recorded digital TV program if no storage space is left or no new disk fragment is requested; and generating a new disk fragment based on the stream bit rate and information on the storage space.

A recorded digital TV program may be managed through a disk fragment list which stores linkage information of disk fragments and an inode of a file system.

The replacing may include locating a next temporally adjacent disk fragment according to the disk fragment list and writing newly recorded data into the located disk fragment, if the duration of the currently recorded digital TV program does not exceed the maximum time-shifting duration.

The replacing may include increasing the duration of the currently recorded digital TV program actually stored in a disk to exceed the maximum time-shifting duration and increasing the disk fragment list when the maximum time-shifting duration is reached and a code rate of the digital TV program reduces.

The replacing may include locating a next temporally adjacent disk fragment according to the disk fragment list and writing newly recorded data into the located disk fragment, if the maximum time-shifting duration is reached and no physically adjacent disk fragment exists in the disk file list.

The replacing may include locating a next temporally adjacent disk fragment according to the disk fragment list and writing newly recorded data into the located disk fragment, if the maximum time-shifting duration is reached and a playing time point of the located disk fragment is within the maximum time-shifting duration.

The replacing may include merging a physically adjacent disk fragment, moving a write pointer to the physically adjacent disk fragment, and updating the disk fragment list if the maximum time-shifting duration is reached, the physically adjacent disk fragment exists in the disk fragment list, and a playing time point of the physically adjacent disk fragment is beyond the maximum time-shifting duration.

The generating the new disk fragment may include searching, in the disk fragment list, for a best matching file fragment block which is currently unreleased; and adding the best matching file fragment block to the file fragment list and moving a write pointer to the new fragment if the best matching file fragment block is searched.

The generating the new disk fragment may include searching, in the disk fragment list, for a best matching file fragment block which is currently unreleased; and determining whether the disk space is sufficient if the best matching file fragment block is not searched and notifying a user if the disk space is insufficient.

The method may further include, if an available disk fragment exists, firstly searching for a disk fragment physically adjacent, and if the disk fragment physically adjacent is searched, merging the searched disk fragment to the current file fragment, modifying information of a disk fragment size in the disk fragment list, and updating the inode table of the file system.

The method may further include, if an available disk fragment exists, firstly searching for a disk fragment physically adjacent, and if the disk fragment physically adjacent is not searched, adding the available disk fragment to the current file, moving the write pointer to the added available disk fragment, and updating the disk fragment list.

According to an aspect of an exemplary embodiment, provided is an apparatus for time shifting in a digital TV, the apparatus including: a user interface module which provides an interface to interact with a user and receives, from the user, setting values and a control request signal for performing time shifting; and a file managing module which manages a plurality of disk fragments of a current file in a disk fragment list and adaptively changes a size of a disk space occupied by a recorded digital TV program to increase or decrease according to a stream bit rate of a transmission stream currently received based on the setting values and the control request signal received from the user interface module.

The setting values may include a maximum time-shifting duration and, when a duration of a currently recorded digital TV program exceeds the maximum time-shifting duration and the stream bit rate of the transmission stream currently received is smaller than a predetermined stream bit rate, the file managing module may delete a digital TV program which is recorded earliest from the current file, delete corresponding disk fragments from the disk fragment list, and replace the digital TV program recorded earliest in the current file with a newly recorded digital TV program.

The setting values may include at least one of a minimum time-shifting limit, a maximum time-shifting limit, a priority for each time-shifting instance, turn-on or off of a key frame index, and turn-on or off of a disk fragment merging function.

The apparatus may further include a bit rate information extracting module which extracts bit rate information from the transmission stream currently received, transmits the bit rate information to the video information index module, and transmits the transmission stream to the file managing module.

The apparatus may further include a video information index module which receives the bit rate information from the bit rate information extracting module to construct a list arranged in a chronological order of a recording time and provide quick search and query functions.

The bit rate information extracting module may process the bit rate information, and the bit rate information may include an absolute time, an absolute data offset, and a key frame label, and the processed bit rate information may include a recording time, a data offset, and a frame type.

In a multiple time-shifting instance scheme in which a plurality of digital TV programs are recorded simultaneously, programs may be recorded in the disk space through the file managing module according to the priority for each time-shifting instance set through the user interface module.

When the disk space is insufficient, the disk space may be preferentially allocated to the digital TV program that does not reach the minimum time-shifting duration.

### BRIEF DESCRIPTION OF THE DRAWINGS

The above and/or other aspects will become apparent and more readily appreciated from the following description of exemplary embodiments, taken in conjunction with the accompanying drawings, in which:

FIG.1 is a flowchart illustrating a method for improving disk space utilization during time-shifting in a digital TV according to an exemplary embodiment;

FIG.2 is a schematic diagram illustrating a structure of an apparatus for improving disk space utilization during time-shifting in a digital TV according to an exemplary embodiment;

FIG.3 is a schematic diagram illustrating a main interface in which a single time-shifting is performed according to an exemplary embodiment;

FIG.4 is a schematic diagram illustrating a main interface in which two time-shiftingare performed simultaneously according to an exemplary embodiment;

FIG.5 is a schematic diagram illustrating an interaction between a user interface module and a file managing module according to an exemplary embodiment;

FIG.6 is a schematic diagram illustrating a mapping relationship between an absolute offset and a file offset in a middleware layer of afile managing module; and

FIG.7 is a flowchart illustrating a method of merging file fragments according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

In a process of recording a time-shifting program, when a duration of a currently recorded time-shifting program exceeds a maximum time-shifting duration which is predetermined, and a stream bit rate of a transmission stream currently received is smaller than an average stream bit rate, a time-shifting program which was recorded earliest is deleted, to release redundant disk fragments, and, the deleted time-shifting program recorded earliest in a current file is replaced with a newly recorded time-shifting file. In this manner, redundant disk fragments may be adaptively released at a smaller stream bit rate while controlling a disk space occupied by the time-shifting program to increase or decrease according to a larger or smaller stream bit rate of a transmission stream. Thus, a size of a disk space occupied by the time-shifting program may be dynamically changed according to requirements such as, for example, the stream bit rate. Also, the problem of low utilization of a disk space when the disk space is insufficient may be avoided.

In an exemplary embodiment, the maximum time-shifting duration is a largest possible duration during which a recorded time-shifting program may be stored in a disk. A minimum time-shifting duration refers to a smallest duration required for a recorded time-shifting program when there is a sufficient disk space.

In an exemplary embodiment, a single time-shifting instance scheme and a multiple time-shifting instance coexistence scheme are provided. The multiple time-shifting instance coexistence scheme is based on the single time-shifting instance scheme, in which a priority for obtaining a disk space is set for each time-shifting instance, and a disk space may be allocated according to the priority of each time-shifting instance when the disk space is insufficient, such that each time-shifting instance may complementarily use the disk space.

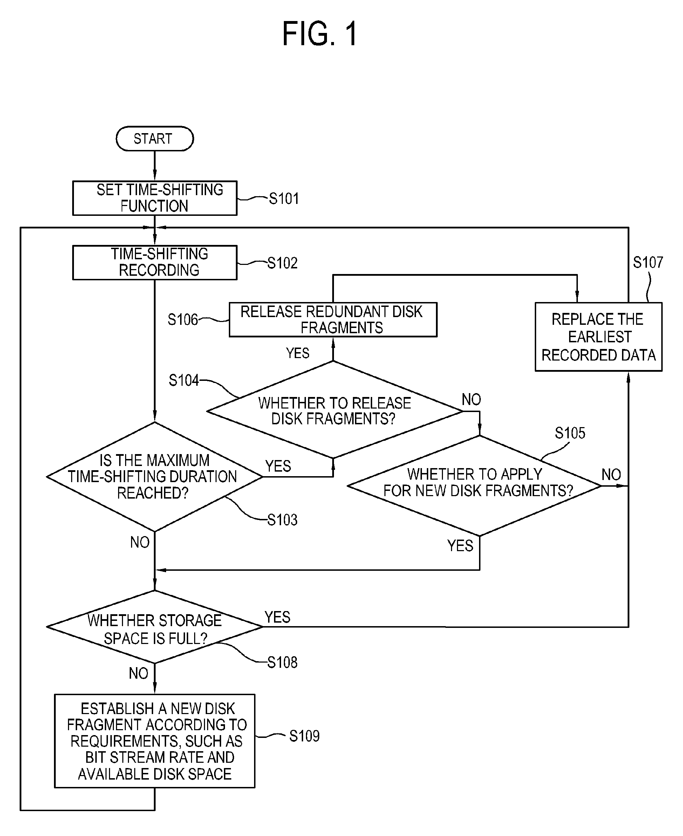

FIG.1 is a flowchart illustrating a method for improving, e.g., optimizing, disk space utilization during time-shifting in a digital TV according to an exemplary embodiment. In the method illustrated in FIG.1, a time shifting function is set (101).

Before start of time-shifting recording, i.e., before recording a digital TV program for time-shifting its viewing, options for the time-shifting function such as the maximum time-shifting duration or the minimum time-shifting duration need to be set through a user interface module or by using default data.

The time-shifting recording begins (102).

It is determined whether a duration of a currently recorded time-shifting program reaches the maximum time-shifting duration which is predetermined (103). If an answer to operation 103 is yes, operation 104 is performed. Otherwise, operation 108is performed.

It is determined whether a stream bit rate of a transmission stream currently received is smaller than an average stream bit rate (104). If an answer to operation 104 is yes,operation 106 is performed. Otherwise, operation 105 is performed.

It is determined whether a newly recorded time-shifting program may replace a previously recorded time-shifting program within the maximum time-shifting duration, that is, whether to apply for a new disk fragment (105). If an answer to operation 105 is yes, operation 108 is performed. Otherwise, operation 107 is performed.

A time-shifting program recorded earliest is deleted so as to release redundant disk fragments (106).

The time-shifting program recorded earliest in a current file is replaced with the newly recorded time-shifting program (107), and the method returns to operation 102.

It is determined whether there is an available disk space (108), and if an answer to operation 108 is yes, operation 109 is performed. Otherwise, operation 107 is performed.

New disk fragments are requested to store a newly recorded time-shifting program, according to a value of a stream bit rate, an available disk space, and an actual size of disk space (109), and the method returns to operation 102.

An exemplary embodiment provides an apparatus for improving disk space utilization during time-shifting of a digital TV using the above method. The apparatus includes a user interface module and a file managing module.

The user interface module, which provides an interface to interact with a digital TV user, is used to set the maximum time-shifting duration according to user settings.

The file managing module sets a disk fragment as a smallest management unit, links all the disk fragments formed in the current file by using a disk fragment list. In a process of recording the time-shifting program, when a duration of currently recorded time-shifting program exceeds the maximum time-shifting duration, and a stream bit rate of a transmission stream currently received is smaller than an average stream bit rate, the time-shifting program which was recorded earliest in the current file is deleted, corresponding disk fragments are deleted from the disk fragment list, and the time-shifting program recorded earliest in the current file is replaced with a newly recorded time-shifting program.

The apparatus at least includes the user interface module and the file managing module, which are provided to improve disk space utilization. In practical applications, a user may need a recorded time-shifting program to play. The user also may need to use functions such as, for example, quick search, query, and rewind and fast forward functions. Thus, a bit rate information extracting module and a video information module may be included in the apparatus.

The bit rate information extracting module is configured to extract bit rate information from a received transmission stream, process the bit rate information, transmit the processed bit rate informationto a video information index module, and transmit the transmission stream to the file managing module. The bit rate information includes an absolute time, an absolute data offset, and a key frame label. The processed bit rate information includes a recording time, a data offset, and a frame type.

The video information index module is configured to set group of pictures (GOP) as a unit, employ the information provided by the bit rate information extracting module to construct a list arranged in a chronological order of the recording time and provide quick search and query functions.

The file managing module is further configured to link a data offset in the current file with an absolute offset of a key frame, according to the list constructed by the video information index module and manage the disk fragments.

In an exemplary embodiment, the key frame is I frame.

Hereinafter, two time-shifting instances are described as an example of the apparatus according to the embodiment with reference to accompanying drawings.

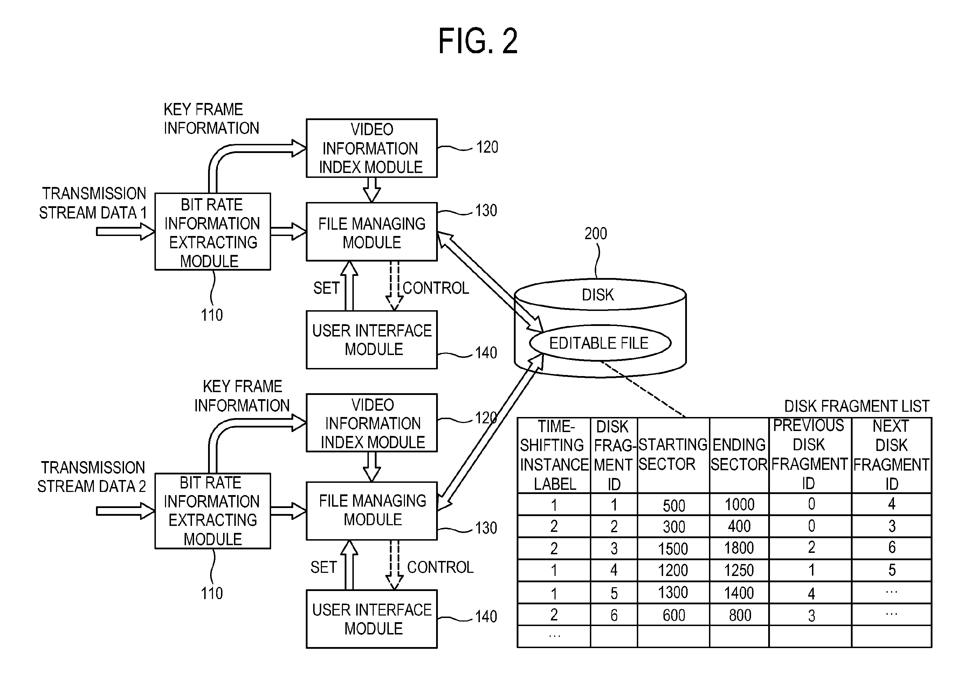

FIG.2 is a schematic diagram illustrating a structure of an apparatus for improving disk space utilization during time-shifting in a digital TV according to an exemplary embodiment. As shown in FIG.2, the two time-shifting instances store respectively recorded data in the same editable file. The two time-shifting instances each have the same corresponding functional modules. Each module of a single time-shifting instance will be described in detail below. The apparatus shown in FIG.2 includes a bit rate information extracting module 110, a video information index module 120, a file managing module 130, and a user interface module 140.

Data of transmission stream data 1 are transmitted from a coaxial cable to the bit rate information extracting module 110 after passing through a TV tuner and being demultiplexed. An encoding format of the transmission stream may be Moving Picture Experts Group 2 (MPEG2) or H.264. Regarding the bit rate information extracting module 110, the method for obtaining frame information may be varied depending on an encoding format of the transmission stream.

When the bit rate information extracting module 110 extracts absolute time information, absolute data offset information, and key frame information of a current video stream and performs processing on the extracted information, the following information may be obtained.

1) Recording time: Start from 0, to replace a time stamp in the transmission stream. Utilize a recording process to extract current time information, so as to avoid the problem of an inaccurate time stamp in the transmission stream.

2) Data offset: Start from 0, which is incremented in terms of bytes in the recording process. Provide a user interface to implement a function to skip, fast forward, or rewind a video, etc.

3) Frame type may be I frame, B frame or P frame.

The recording time and the data offset are incremented from 0. A packet header of the transmission stream starts from 0x47. It is assumed that each packet in the transmission stream includes 188 bytes. According to the structure of the transmission stream, the bit rate information extracting module 110 may extract basic information of all the frames in a hardware mode or software mode. After processing information about a frame, the bit rate information extracting module 110 may transmit the information to the video information index module 120. The video information index module 120 is responsible for arranging all the frames into one queue.

Regarding the original transmission stream data 1, the bit rate information extracting module 110 may modify the time stamp in a packet of the transmission stream as current time. Thus, in a subsequent playing process, the time stamp in the packet of the transmission stream may be directly used, so as to avoid the problem of inaccurate playing time caused by excessive buffering of data in a decoder. Alternatively, the time stamp may not be modified. Instead, the original data may be directly output to the file managing module 130. In this case, it is preferable that decoder buffer has a smaller size.

The key frame information may be inputted to a video information processing module. A queue arranged in a chronological order may be formed in GOP as a unit. In an exemplary embodiment, a structure of each GOP information may be as follows.

typedef struct { uint32_t uiTimeCode; // 4 /** GOP time stamp, which is also the time stamp of I frame*/uint32_t uiPacketPtr; // 4 /** data offset of I frame*/ uint16_t usGopLength; // 2 /** total frame number, including I frame, B frame and P frame*/uint8_t ubRefPicCnt; // 1 /** number of reference frame, including P frame*/uint16_t usPicTimeCode[40]; // 2 /** time stamp of reference frame compared with I frame*/uint16_t usPicStartPos[40]; // 40 /** data offset of reference frame*/uint16_t usPicLength[40]; // 40 /** length of reference frame*/

}PvrMdbGopPid_t;

The above data structure is used to record information of the I frame and the P frame and provides two kinds of data query modes.

A first mode: query a data offset by using time, which is used to jump to a position corresponding to the data offset according to specified time.

A second mode: query time by using the data offset, which is used to extract time information of a current playing position and display a current playing time. Alternatively, it may also check whether the current playing position is located within a time-shifting range.

The GOP data in the video information index module 120 may be stored in a disk or a memory, so as to provide functions of quick search and query. The main functions thereof are to provide functions, for example, fast forward or rewind to search for the key frame, and provide an absolute data offset and a size of the key frame in the file to the file managing module 130. When the GOP data is stored in the memory, a direct binary search may be performed. When the GOP data is stored in a disk, information of several (e.g., 60) GOPs may be read to a memory queue each time, and searched time is compared with time in the memory queue. If the search is not successful, information about 60 GOPs of a next group is read into the memory queue with the binary search. When the number of GOPs is not 60, GOP information according to an actual size may be read. When the searched information crosses a border (or a range) of the time-shifting, an error message is returned.

The user interface module provides an interface to interact with a TV user. In an exemplary embodiment, the interface may be denoted by various setting menus, such as a pop-up dialog box or playback menus such as, for example, play, stop, fast forward, rewind, etc. The user interface module 140 may be implemented in a software mode, which is implemented in an upper layer of the file managing module 130. Here, the user interface module 140 only needs to call the file managing module 130. However, in this case, the file managing module 130 needs to transmit an event to the user interface module 140.

In an exemplary embodiment, direct calling by the user in an exemplary embodiment may include the following operations:

1) Set a minimum time-shifting limit;

2) Set a maximum time-shifting limit;

3) Set a priority for each time-shifting instance;

4) Set whether to turn on a key frame index;

5) Manipulate playback operations, such as start, stop, fast forward, or rewind; and

6) Turn on or turn off a disk fragment merging function.

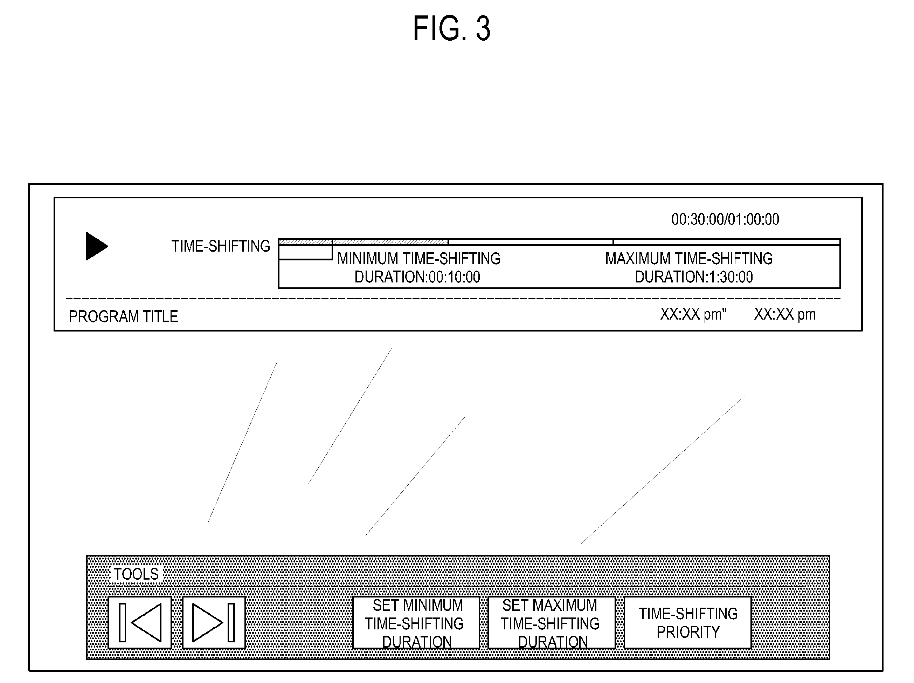

In operation 5) above, various control keys may be directly input to a TV controller. An application program may capture an input from a corresponding button and directly call the user interface module 140. The user interface module 140 may adjust an interface and call the file managing module 130. An example main interface of a single time-shifting instance is shown in FIG.3.

The minimum time-shifting duration may be decreased or increased by using left and right buttons. After setting the minimum time-shifting duration, a return button (not shown) may be pressed in the interface to complete setting the minimum time-shifting duration. The set minimum time-shifting duration may be denoted by, for example, MINIMUM TIME-SHIFTING DURATION:XX:XX pm" in the main interface. Settings about the maximum time-shifting duration and other options are similar to that about the minimum time-shifting duration and a detailed description thereof will be omitted.

There may be other methods to enter the setting interface. For example, when the disk space is occupied and the duration of recorded data has not reached the maximum time-shifting duration, a corresponding dialog box may pop up to query whether the user wants to reduce the maximum time-shifting duration. If the user wants to reduce the maximum time-shifting duration, the setting interface about the maximum time-shifting duration may be entered.

Event notification of the file managing module 130 may be performed as follows.

1) The disk space is occupied.

2) File a read or write error.

3) Play a header or an end of a file.

According to event processing, for example, notification may be displayed to the user with a message box. However, some events may be directly received and processed by application programs, and no related message box may be displayed. For example, when pressing an event from a back button to play to the file header, the event may be received by an application program directly. The application program may indicate to start playing from the file header. When an error occurs, the application program may switch to a TV mode.

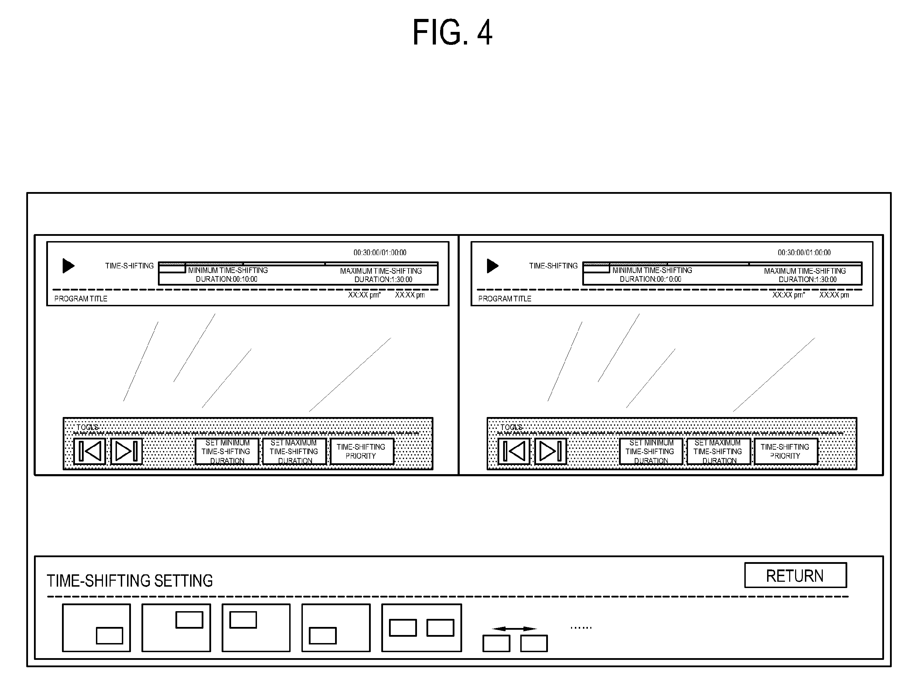

When two time-shifting instances run simultaneously, an example main interface thereof may be shown as in FIG.4. The two time-shifting instances may each have an interface thereof which is arranged side by side. When the two time-shifting instances run simultaneously and a setting button (not shown) is pressed, a time-shifting setting interface may be popped up, and a boundary of an interface of a time-shifting instance of which setting is to be performed may be highlighted. Here, pressing the left and right buttons may enable to switch to the other time-switching instance. Pressing a down button (not shown) may move a screen of the interface of a corresponding time-shifting instance. In the time-shifting setting interface, the user may adjust a position relationship between the interfaces of two time-shifting instances. Pressing an up button (not shown) may move the screen of the interface of the corresponding time-shifting instance. Pressing the return button may close the time-shifting setting interface. Pressing a stop button (not shown) may close a corresponding interface of the time-shifting instance. Subsequently, the other interface of the time-shifting instance may be enlarged to a full screen.

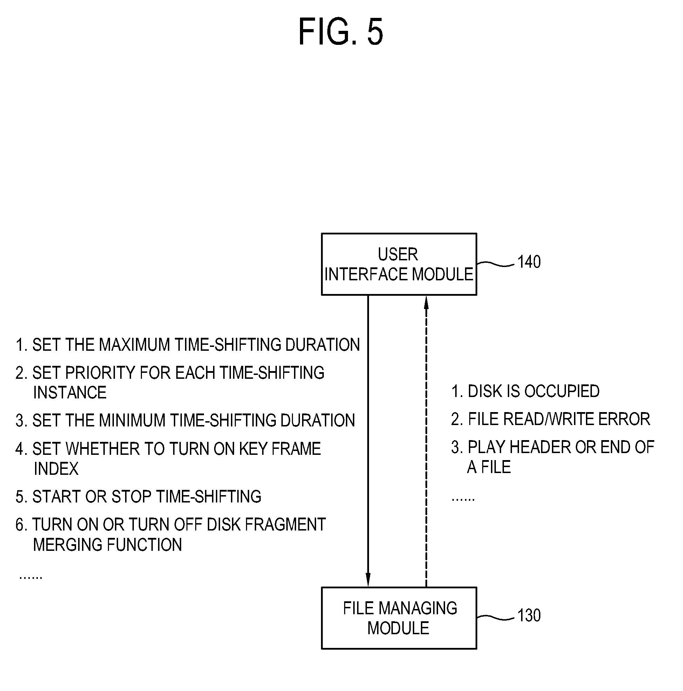

FIG.5 is a schematic diagram illustrating an interaction between a user interface module and a file managing module according to an exemplary embodiment.

The file managing module 130 is a core module in an exemplary embodiment. Each time-shifting instance may interact with the file managing module 130 through the user interface module 140. The file managing module 130 may differentiate time-shifting instances using a corresponding label thereof. The file managing module 130 sets a physical disk fragment as a smallest management unit, adds functions, such as delete, merge, establish, etc., regarding disk fragments to a file system driver. The file managing module 130 may also link all the disk fragments by using a disk fragment list, and match a data offset in a file with the absolute offset of the key frame.

The file managing module 130 provides an interface to interact with other modules, obtains real-time bit rate data from the bit rate information extracting module 110, obtains reference frame information from the video information index module 120 so as to read data of a specified position. However, the user interface module 140 may directly or indirectly control the file managing module 130. In this exemplary embodiment, these three modules are described in detail. Below, a description about the file managing module 130 may be first provided.

Implementation of the file managing module 130 may be divided as a middleware layer and a driver layer. The middleware layer is responsible for providing basic file operations for an external module.

Main functions of the middleware layer are as follows.

1) Provide an abstract basic interface.

2) Match the absolute offset and the offset of the current file in a one-to-one correspondence.

3) Automatically adjust a disk space size occupied by a time-shifting instance by utilizing a priority of the time-shifting instance.

The middleware layer may shield a difference between file callings and may provide basic user interfaces to the user. For example,

1) Open (filename)

2) Close (file description)

3) Read (file description, buffer pointer, buffer size)

4) Write (file description, buffer pointer, buffer size)

5) Search (file description, offset)

6) loctI (file description, type)

Different time-shifting instances may provide different file descriptors for "Open" interface. Other operations may use the file descriptor as a parameter. "Read" interface and "Write" interface simultaneously support a common buffer input/output (I/O) mode and a direct I/O mode for read and write operations. The buffer may be 4k byte aligned. A parameter "offset" in "Search" interface is an absolute offset provided by the video index module 120 (start from 0, set a packet size of a transmission stream as a minimum increment unit). Since a file is actually recorded by a time-shifting instance using a circular buffer, the parameter "offset" needs to be mapped to an actual offset in the file.

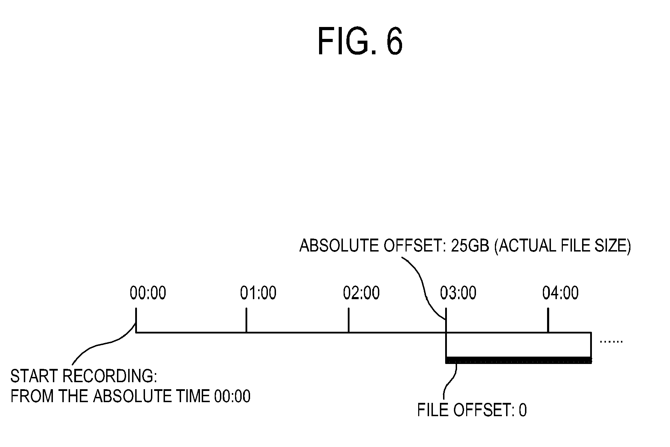

As shown in FIG.6, an absolute time axis starts to measure time from 0. However, a playable duration of an actual time-shifting file may only occupy part on the absolute time axis. When recording of the file ends, new data may be written into a file header. Thus, when a new round of recording starts, the absolute offset may be a size of the current file. However, the actual offset may be 0.

A priority of a time-shifting instance may be set with "loctI" interface. A priority scheme which is used when the disk space is insufficient is described below.

1) Setting the maximum time-shifting duration and the minimum time-shifting duration for a time-shifting instance is performed before setting the priority thereof. The default maximum time-shifting duration may be, for example, 90 minutes. The default minimum time-shifting duration may be, for example, 10 minutes. The maximum and minimum time-shifting durations may be dynamically adjusted through the user interface module.

2) Priority of the time-shifting instance may be dynamically adjusted.

3) When the time-shifting instance reaches the maximum time-shifting duration, the time-shifting duration may not be continued.

4) When the same priorities are set for time-shifting instances and the disk space is insufficient, in a case where a recorded duration of a time-shifting instance 2 exceeds the minimum time-shifting duration while a recorded duration of a time-shifting instance 1 does not exceed the minimum time-shifting duration, the time-shifting instance 2 may automatically release disk fragments to be provided to the time-shifting instance 1. When the time-shifting instance 2 plays a disk fragment to be released, the time-shifting instance 2 jumps to data recorded earliest.

5) When different priorities are set for time-shifting instances and the disk space is insufficient, in a case where a priority of time-shifting instance 2 is higher than that of time-shifting instance 1 while the duration of time-shifting instance 2 does not reach the maximum time-shifting duration, the time-shifting instance 2 may forcibly use disk fragments of the time-shifting instance 1, until the duration of time-shifting instance 1 is substantially close to the minimum time-shifting duration. Here, when the duration of time-shifting instance 1 is smaller than the minimum time-shifting duration, the time-shifting instance 2 cannot forcibly use the disk fragments of the time-shifting instance 1.

A driver layer performs a main function of the file managing module. In addition to normal read and write operations, main functions performed by the driver layer are as follows:

1) Maintain a disk fragment list;

2) Establish a new disk fragment;

3) Release disk fragments; and

4) Merge disk fragments.

An example disk fragment list is shown in Table 1.

**[Table 1]**

| Label of a time-shifting instance | Disk fragment ID | Starting sector | Ending sector | Previous disk fragment ID | Next disk fragment ID |
|---|---|---|---|---|---|
| 1 | 1 | 500 | 1000 | 0 | 4 |
| 2 | 2 | 300 | 400 | 0 | 3 |
| 2 | 3 | 1500 | 1800 | 2 | 6 |
| 1 | 4 | 1200 | 1250 | 1 | 5 |
| 1 | 5 | 1300 | 1400 | 4 | ... |
| 2 | 6 | 600 | 800 | 3 | ... |

The disk fragment list shown in Table 1 includes label information of two time-shifting instances. Different file descriptors correspond to different instance labels. A data structure of the disk fragment list is a bidirectional linked list. Each disk fragment has a disk fragment identification (ID). A disk fragment may point to previous and next disk fragment IDs. Two adjacent disk fragments may be physically discontinuous as long as a TV program recorded on the adjacent disk fragments is continuous. Meanwhile, each disk fragment includes a starting sector and an ending sector, which are physically continuous. With reference to each file corresponding to a time-shifting instance, there are corresponding file header and file end.

File fragments are scattered throughout a disk. When the file managing module needs to write new data into a time-shifting file and the disk space is insufficient, the file managing module may search the disk fragment list for available fragments. If there are no available fragments, the file managing module may establish a new fragment and add the disk fragment to the disk fragment list.

The disk fragments of the recorded time-shifting program stored in the disk space are managed by using the disk fragment list and inode of the file system.

The disk fragment list is a linked list of disk fragments. The disk fragments are arranged in a sequence of the recorded time-shifting programs. When the recorded time-shifting program is loaded, the disk fragment list is queried and the physical address of the next disk fragment to be read is confirmed.

The inode of the file system is a document structure used in an existing UN IX file system. The inode includes information on the file system such as regular files, directories, etc. Files include one inode, respectively, and the inode includes information on the corresponding file such as an owner group, an access mode (e.g., reading, writing, and execution authorities), a file type, an inode number, etc. The files in the file system may be identified through inherent inode numbers. Generally, when the file system is generated, approximately 1% of an entire space is allocated to the inode. Since the space for the inode is limited, the maximum number of files which the file system may have is also limited.

In an exemplary embodiment, a process for adding a disk fragment is as follows:

1) Search in the disk fragment list a best matching file fragment block currently unreleased.

2) When the best matching file fragment block is searched, the best matching file fragment block is added to the disk fragment list, and a write pointer is moved to the new fragment.

3) When the best matching file fragment block is not searched, it is determined whether the disk space is sufficient, and if the disk space is insufficient, the user interface module is notified with a message.

4) When there is an available disk fragment, a fragment physically adjacent is first searched, and if the fragment physically adjacent is searched, the searched fragment is merged to the current file fragment, information of a disk fragment size in the current disk fragment list is modified, and a file system inode table is updated.

5) When no fragment physically adjacent is searched, a disk fragment of an available space is added to the current file, the write pointer is moved to the new fragment, and the disk fragment list is updated. Meanwhile, the disk fragment information is added to the disk fragment list and the inode table of the file system is updated.

A time-shifting instance may automatically or manually release a file to release file fragments, and, in an exemplary embodiment, the process is performed as follows:

1) Due to reduction of the transmission stream, when the total duration of actually recorded data exceeds the maximum duration, the recording time is used to release a file fragment recorded earliest, and the file fragment recorded earliest is deleted from the disk fragment list and the inode table of the file system.

2) If the released disk fragment is significantly larger than a space currently needed, the file managing module only needs to update options of "starting sector" and "ending sector" in the disk fragment list, and information of the time-shifting file in the inode table of file system.

3) When the user interface module reduces the maximum time-shifting duration to an actual time-shifting duration or below, disk fragments of a file recorded earliest need to be released.

4) When one time-shifting instance ends, items in the disk fragment list corresponding to the ended time-shifting instance are deleted, and the inode table of the time-shifting file is updated.

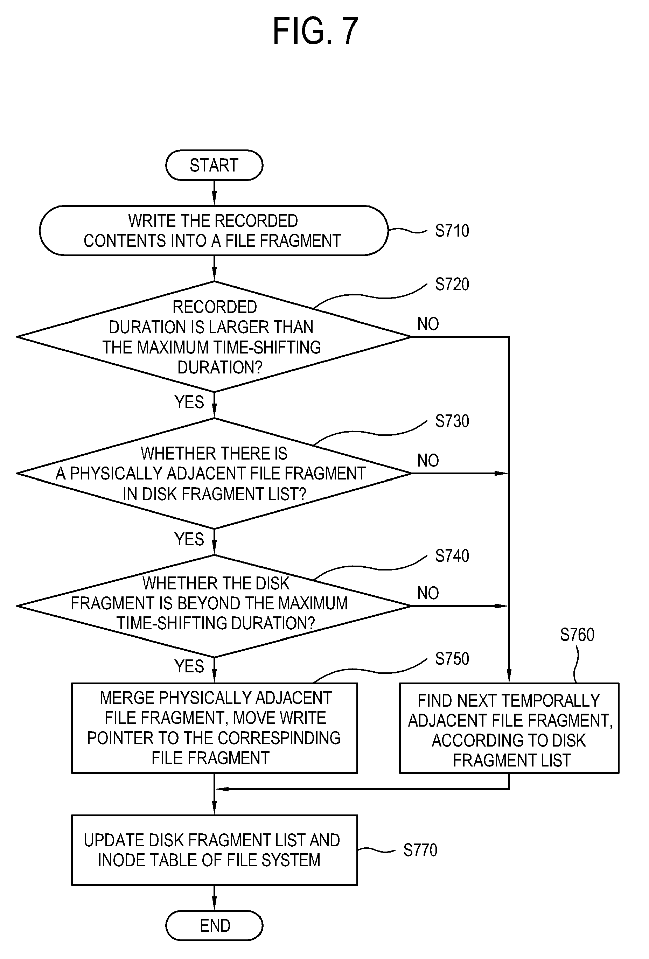

To avoid generating a large number of disk fragments, the file managing module needs to merge disk fragments physically adjacent. The process for merging file fragments is shown in FIG.7, which includes the follows:

1) When the time-shifting duration does not exceed the maximum duration, a next temporally adjacent file fragment is located according to the disk fragment list, and newly recorded data are written into the located file fragment (710).

2) When the recorded data reaches the maximum time-shifting duration while the code rate of the time-shifting program is reduced, the time-shifting duration of a file actually stored in a disk may exceed the maximum duration, and the disk fragment list may become longer correspondingly.

3) When it is determined that the recorded data reaches the maximum time-shifting duration ('YES' to operation 720) and there is no physically adjacent file fragment in the disk fragment list ('YES' to operation 730), a next temporally adjacent file fragment is located according to the disk fragment list (760), and newly recorded data are written into the located file fragment.

4) When the recorded data reaches the maximum time-shifting duration ('YES' to operation 720) and there is a physically adjacent file fragment in the disk fragment list('YES' to operation 730), in a case where a playing time point corresponding to the physically adjacent disk fragment is within the maximum time-shifting duration ('NO' to operation 740), a next temporally adjacent file fragment is located according to the disk fragment list (760), and newly recorded data are written into the file fragment.

5) When the recorded data reaches the maximum time-shifting duration('YES' to operation 720), there is a physically adjacent file fragment in the disk fragment list ('YES' to operation 730), and the playing time point corresponding to the physically adjacent disk fragment is beyond the maximum time-shifting duration ('YES' to operation 740), the physically adjacent file fragment is merged (750), a write pointer is moved to the fragment (750), and the disk fragment list is updated (770).

Based on the above exemplary embodiment, it can be seen that, in a process of recording a time-shifting program, a time-shifting program recorded earliest may be deleted to release redundant disk fragments, and the time-shifting program recorded earliest in the current file may be replaced by a newly recorded time-shifting file, when the following two conditions are satisfied: The duration of a time-shifting program currently recorded exceeds the maximum time-shifting duration which is predetermined, and the stream bit rate of transmission stream currently received is smaller than an average stream bit rate. Accordingly, redundant disk fragments may be adaptively released at a smaller stream bit rate, to enable a disk space occupied by the time-shifting program to increase or decrease, according to a larger or smaller streaming bit rate of the transmission stream. Thus, a size of the disk space occupied by the time-shifting program may be dynamically changed according to requirements, so as to avoid the problem of low utilization of the disk space when the disk space is insufficient.

Besides, in the multiple time-shifting instance scheme in an exemplary embodiment, a priority for obtaining the disk space may be set for each time-shifting instance. When the disk space is insufficient, the disk space may be allocated according to the priority of each time-shifting instance. Thus, the disk space may be dynamically and efficiently allocated among multiple time-shifting instances. When the disk space is insufficient, the disk space occupied by the time-shifting instance may be reduced to be provided for another time-shifting instance. Thus, each time-shifting instance may complementary use the disk space.

In addition, in exemplary embodiments, a time-shifting instance may share a file system with other applications. It should be noted that new functions added to the driver layer of the file managing module do not affect other functions of the file system.

Although a few exemplary embodiments have been shown and described, it will be appreciated by those skilled in the art that changes may be made in these exemplary embodiments without departing from the principles and spirit of the inventive concept, the range of which is defined in the appended claims and their equivalents.

## Claims

1. A method of time shifting in a digital TV, the method comprising:
determining whether a duration of a currently recorded digital TV program reaches a preset maximum time-shifting duration;
determining whether to release redundant disk fragments by comparing a stream bit rate of a transmission stream currently received and a predetermined stream bit rate if it is determined that the duration of the currently recorded digital TV program exceeds the preset maximum time-shifting duration;
deleting a digital TV program recorded earliest to release the redundant disk fragments if the stream bit rate of the currently received transmission stream is lower than or equal to the predetermined stream bit rate; and
replacing the digital TV program recorded earliest in a current file with the newly recorded digital TV program.

2. The method of claim 1, further comprising setting at least one of the maximum time-shifting duration and a minimum time-shifting duration in advance by a user.

3. The method of claim 2, further comprising setting priorities of obtaining the storage space in advance if a plurality of digital TV programs are recorded simultaneously.

4. The method of claim 3, wherein if the storage space is insufficient, the storage space is preferentially allocated to a digital TV program that does not reach the minimum time-shifting duration.

5. The method of claim 1, wherein a recorded digital TV program is managed through a disk fragment list which stores linkage information of disk fragments and an inode of a file system.

6. The method of claim 1, further comprising:
determining whether new disk fragments are requested depending on whether a newly recorded digital TV program is capable of replacing a previously recorded digital TV program within the maximum time-shifting duration if the stream bit rate of the currently received transmission stream is higher than or equal to the predetermined stream bit rate;
determining whether there is any storage space left if it is determined that the duration of the currently recorded digital TV program does not exceed the maximum time-shifting duration or if the new disk fragments are requested;
replacing the digital TV program recorded earliest in the current file with the newly recorded digital TV program if no storage space is left or no new disk fragment is requested; and
generating a new disk fragment based on the stream bit rate and information on the storage space.

7. The method of claim 6, wherein a recorded digital TV program is managed through a disk fragment list which stores linkage information of disk fragments and an inode of a file system.

8. The method of claim 6, wherein the generating a new disk fragment comprises:
searching, in the disk fragment list, for a best matching file fragment block which is currently unreleased; and
adding the best matching file fragment block to the file fragment list and moving a write pointer to the new fragment if the best matching file fragment block is searched.

9. An apparatus for time shifting in a digital TV, the apparatus comprising:
a user interface module which provides an interface to interact with a user and receives, from the user, setting values and a control request signal for performing time shifting; and
a file managing module which manages a plurality of disk fragments of a current file in a disk fragment list and adaptively changes a size of a disk space occupied by a recorded digital TV program to increase or decrease according to a stream bit rate of a transmission stream currently received based on the setting values and the control request signal received from the user interface module.

10. The apparatus of claim 9, wherein, the setting values comprise a maximum time-shifting duration and, when a duration of a currently recorded digital TV program exceeds the maximum time-shifting duration and the stream bit rate of the transmission stream currently received is smaller than a predetermined stream bit rate, the file managing module deletes a digital TV program which is recorded earliest from the current file, deletes corresponding disk fragments from the disk fragment list, and replaces the digital TV program recorded earliest in the current file with a newly recorded digital TV program.

11. The apparatus of claim 9, wherein the setting values comprises at least one of a minimum time-shifting limit, a maximum time-shifting limit, a priority for each time-shifting instance, turn-on or off of a key frame index, and turn-on or off of a disk fragment merging function.

12. The apparatus of claim 9, further comprising a bit rate information extracting module which extracts bit rate information from the transmission stream currently received, transmits the bit rate information to the video information index module, and transmits the transmission stream to the file managing module.

13. The apparatus of claim 12, further comprising a video information index module which receives the bit rate information from the bit rate information extracting module to construct a list arranged in a chronological order of a recording time and provide quick search and query functions.

14. The apparatus of claim 12, wherein the bit rate information extracting module processes the bit rate information, and the bit rate information comprises an absolute time, an absolute data offset, and a key frame label, and the processed bit rate information comprises a recording time, a data offset, and a frame type.

15. The apparatus of claim 11, wherein in a multiple time-shifting instance scheme in which a plurality of digital TV programs are recorded simultaneously, programs are recorded in the disk space through the file managing module according to the priority for each time-shifting instance set through the user interface module.
